(19) Europäisches Patentamt / European Patent Office / Office européen des brevets

(11) **EP 3 115 630 A1**

(12) **EUROPEAN PATENT APPLICATION**
published in accordance with Art. 153(4) EPC

(43) Date of publication:
**11.01.2017 Bulletin 2017/02**

(51) Int Cl.:
*F16C 11/12* $^{(2006.01)}$     *A47K 13/12* $^{(2006.01)}$

(21) Application number: **14883674.5**

(22) Date of filing: **15.08.2014**

(86) International application number:
**PCT/CN2014/084536**

(87) International publication number:
**WO 2015/127766 (03.09.2015 Gazette 2015/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **28.02.2014   CN 201410069989**

(71) Applicant: **Hui Zhou Toneluck Electro-Mechanics Co., Ltd.**
**516005 Guandong (CN)**

(72) Inventors:
• **DENG, Fang**
**Huizhou City**
**Guangdong 516005 (CN)**

• **PATRICK, Ng**
**Huizhou City**
**Guangdong 516005 (CN)**
• **CHEN, Xiaodong**
**Huizhou City**
**Guangdong 516005 (CN)**

(74) Representative: **Liesegang, Eva**
**Boehmert & Boehmert**
**Anwaltspartnerschaft mbB**
**Patentanwälte Rechtsanwälte**
**Pettenkoferstrasse 20-22**
**80336 München (DE)**

(54) **AUTOMATIC TURNOVER DEVICE**

(57)    An automatic turnover device for opening and closing a turnover piece is disclosed. The automatic turnover device comprises a base (11) mounted on the device body having a turnover piece; at least one drive mechanism (2) mounted on the base (11) and connected to the turnover piece, and enabling the turnover piece to automatically move between a closed position and an open position; and at least one elastic element configured and mounted to store the predetermined energy when the turnover piece is in the closed position, and to at least partially release the stored predetermined energy during the process the at least one drive mechanism is driving the turnover piece from the closed position to the open position, thereby at least partially balancing the weight of the turnover piece during the driving process.

Fig.2

EP 3 115 630 A1

**Description**

Cross Reference of Related Application

This application claims the priority and benefit of the Chinese Patent Application No. 201410069989.1, entitled "Automatic Turnover Device", filed on February 28, 2014, the disclosure of which is incorporated herein by reference in its entirety as part of the present application.

Technical Field

The invention relates to the field of industrial control and automation, and more particularly to an automatic turnover device used for opening and closing a turnover piece such as a lid and a door.

Background of the Art

Products such as household appliances and automobiles generally comprise a turnover piece, for example, a lid and a door. Some turnover pieces are manually opened and closed. However, with the development of technology, people have more and more high requirements on automation of those products, and it is desired that the turnover piece like the lid or door can be automatically opened and closed. In order to implement the automatic opening and closing function of the turnover piece, many manufacturers develop a turnover piece with the automatic opening and closing function. However, the product with such turnover piece still suffers from some problems and cannot fully meet the demands of consumers.

For example, most of the existing turnover pieces are directly driven by a motor, and a high-power motor is required in case of a large weight of the turnover piece. The high-power motor not only generates a noise during working, but also is high in power consumption, large in size, inconvenient to assemble, and thus can increases the cost of a whole system. In addition, since a turnover torque of the turnover piece is not linearly changed, the turnover piece cannot be turned over smoothly at a constant speed and is poor in comfort level.

Besides, if the motor directly drives the turnover piece with a larger weight, the motor has larger load, such that the motor works at an overload for a long time and is extremely easy to damage and a maintenance cost is increased, a user complains about the quality of the product, and the market competitiveness and the brand image of an enterprise are affected.

Furthermore, the existing turnover piece is not automatically stopped in abnormal cases (for example, power failure motor fault or part failure), and is closed downwards under the action of gravity. A human body may be smashed due to a huge impact force in closing, and a safety accident occurs. Besides, since the existing turnover piece is not stopped or ascends oppositely even encountering a counteraction force in the closing process, and rather continues to descend. As result, the human body may be clamped and lead to the safety accident.

Therefore, there is a need for a turnover mechanism which is capable of smoothly turning over and is convenient and flexible to operate. In the meantime, such turnover mechanism should be driven by a small-power drive mechanism (for example, a motor, a hydraulic motor or a pneumatic motor). Besides, such turnover mechanism should also have a safety function and a fault warning function.

Summary of the Invention

The present invention aims at the above problems in prior art, and an object of the present invention is to provide an automatic turnover device used for opening and closing a turnover piece. With the automatic turnover device of the present invention, the turnover piece can be turned over smoothly, the power and noise of the drive mechanism can be reduced and thus the production cost can be reduced.

In addition, with the automatic turnover mechanism according to the present invention, it is ensured that an alarm is given out when the turnover mechanism has a fault, thereby facilitating use and maintenance.

Furthermore, with the automatic turnover mechanism according to the present invention, it is ensured that the turnover piece can be safely turned over without causing any safety problem.

According to one aspect of the present invention, there is provided an automatic turnover device used for opening and closing a turnover piece, the automatic turnover piece comprises: a base mounted on a device body having the turnover piece; at least one drive mechanism mounted on the base and connected to the turnover piece, and enabling the turnover piece to automatically move between a closed position and an open position; and at least one elastic element configured and mounted to store the predetermined energy when the turnover piece is in the closed position, and to at least partially release the stored predetermined energy during the process that the at least one drive mechanism is driving the turnover piece from the closed position to the open position, thereby at least partially balancing the weight of the turnover piece during the driving process.

In one embodiment of the present invention, the automatic turnover device further comprises: at least one rotary shaft, one end of the at least one first rotary shaft of the at least one rotary shaft being connected to an output shaft of the at least one drive mechanism respectively by a coupler and the other end being connected to the turnover piece; and at least one supporting member, rotatably supporting the at least one rotary shaft on the base respectively.

In one embodiment of the present invention, one end of at least one second rotary shaft of the at least one rotary shaft is a free end, and the other end is connected to the turnover piece.

In one embodiment of the present invention, the automatic turnover device further comprises at least one connecting member connected to the other end of the at least one rotary shaft respectively and used for mounting the turnover device.

In one embodiment of the present invention, the number of the at least one supporting member is twice that of the at least one rotary shaft, and each rotary shaft of the at least one rotary shaft is supported by two supporting members.

In one embodiment of the present invention, the at least one supporting member is a bearing.

In one embodiment of the present invention, the at least one drive mechanism comprises a motor.

In one embodiment of the present invention, the automatic turnover device further comprises at least one elastic element mounting portion, respectively fixed to at least one of the at least one first rotary shaft, wherein, one end of the at least one elastic element is connected to the elastic element mounting portion, and the other end of the at least one elastic element is connected to the base respectively.

In one embodiment of the present invention, the automatic turnover device further comprises at least one elastic element mounting portion, respectively fixed to at least one of the at least one first rotary shaft and/or the at least one second rotary shaft, wherein, one end of the at least one elastic element is connected to the elastic element mounting portion, and the other end of the at least one elastic element is connected to the base respectively.

In one embodiment of the present invention, one or two sides of each elastic element mounting portion of the at least one elastic element mounting portion are provided with at least one elastic element.

In one embodiment of the present invention, the elastic element mounting portion is a fixing sleeve fixedly connected to at least one of the at least one second rotary shaft and/or at least one first rotary shaft, wherein both sides or one side of the fixing sleeve in the axial direction are or is provided with a concave portion for containing one end of the elastic element.

In one embodiment of the present invention, the elastic element mounting portion is a radial through hole penetrating through the rotary shaft, one end of the elastic element is mounted in the through hole and the other end is mounted to the base.

In one embodiment of the present invention, one supporting member for supporting the rotary shaft is arranged on each of both sides of each of the at least one elastic element mounting portion.

In one embodiment of the present invention, the at least one elastic element is at least one selected from a group consisting of a torsional spring, a coil spring and a compression spiral spring or any combination thereof.

In one embodiment of the present invention, the automatic turnover device further comprises an elastic element mounting base, mounted on the device body having the turnover piece or serving as a part of the device body, wherein, one end of the at least one elastic element is fixed to the mounting base and the other end abuts against the underside of at least a part of the turnover piece.

In one embodiment of the present invention, at least one elastic element is at least one selected from a group consisting of a plate spring, a compression spiral spring and a leaf spring or any combination thereof.

In one embodiment of the present invention, the at least one drive mechanism comprises a speed reduction motor, and a static torque $M_{static}$ torque of the speed reduction motor, a maximal load torque $M_{maximal}$ turnover piece torque of the turnover piece and the maximal torque $M_{maximal}$ elastic element torque of the at least one elastic element are set to meet: $M_{maximal}$ turnover piece torque $> M_{static\ torque} > M_{maximal}$ turnover piece $_{torque} - M_{maximal}$ elastic element torque, such that the turnover piece is capable of stopping in any position in a predetermined interval between the closed position and the open position.

In one embodiment of the present invention the automatic turnover device further comprises a cover, the cover and the base together constitute a housing for defining an airtight space, the at least one drive mechanism is contained in the airtight space, wherein the other end of the at least one rotary shaft extends out of the housing respectively.

In one embodiment of the present invention, the automatic turnover device further comprises a control system in communication connection with the drive mechanism, wherein the control system monitors a current of the at least one drive mechanism in an opening process of the turnover piece, and gives out a fault warning when the current of the at least one drive mechanism is higher than a first predetermined threshold value.

In one embodiment of the present invention, the control system further monitors a current of the at least one drive mechanism in a closing process of the turnover piece, and gives out a fault warning when the current of the at least one drive mechanism is lower than a second predetermined threshold value.

In one embodiment of the present invention, the control system further monitors a current of the at least one drive mechanism in a closing process of the turnover piece, gives out a safety warning when the current of the at least one drive mechanism is higher than a third predetermined threshold value and drives the turnover piece toward the open position by the at least one drive mechanism.

In one embodiment of the present invention, the control system is in communication connection with an external main control system by a connector disposed outside the base.

In one embodiment of the present invention, the automatic turnover device further comprises a control system, wherein the control system is connected to a motor of the at least one drive mechanism and comprises: a controller, being in communication connection with an external main control system and connected to the motor so as to control the motor according to a signal from the external main control system, and comprising at least two AD converters; and a signal acquiring circuit, comprising: a first resistor, one end of the first resistor being connected to one of at least two AD converters and the other end being connected to a power source input end of the motor and used for acquiring a voltage or current signal of the motor; a second resistor, one end of the second resistor being connected to the other of the at least two AD converters, and the other end being connected to a ground terminal of the motor; and a milliohm resistor, one end of the milliohm resistor being connected to the other end of the first resistor and the other end of the milliohm resistor being connected to the ground terminal of the motor, wherein the controller performs differential treatment on the two signals acquired by the two AD converters to eliminate the interference in the collected motor signals.

In one embodiment of the present invention, the ground terminal of the motor and the ground terminal of the controller are connected to separate grounds.

In one embodiment of the present invention, the signal acquiring circuit further comprises capacitors, connected in parallel with each other, and connected between the other end of the first resistor and the ground of the motor in parallel with the milliohm resistor.

In one embodiment of the present invention, the one end of the first resistor is also connected to one end of a filter circuit, the other end of the filter circuit is connected to the terminal of the controller, the one end of the second resistor is connected to one end of another filter circuit, and the other end of the another filter circuit is connected to the ground of the controller.

According to another aspect of the present invention, there is provided a control system for controlling motor operation, the control system comprises: a controller, being in communication connection with an external main control system and connected to the motor so as to control the motor according to a signal from an external main control system, and comprising at least two AD converters; and a signal acquiring circuit, comprising: a first resistor, one end of the first resistor being connected to one of at least two AD converters and the other end being connected to a power source input end of the motor and used for acquiring a voltage or current signal of the motor; a second resistor, one end of the second resistor being connected to the other of the at least two AD converters, and the other end being connected to a ground terminal of the motor; and a milliohm resistor, one end of the milliohm resistor being connected to the other end of the first resistor and the other end of the milliohm resistor being connected to the ground terminal of the motor, wherein the controller performs differential treatment on the two signals acquired by the two AD converters to eliminate the interference in the collected motor signals.

In one embodiment of the present invention, the ground terminal of the motor and the ground terminal of the controller are connected to separate grounds.

In one embodiment of the present invention, the signal acquiring circuit further comprises capacitors, connected in parallel with each other, and connected between the other end of the first resistor and the ground of the motor in parallel with the milliohm resistor.

In one embodiment of the present invention, the one end of the first resistor is connected to one end of a filter circuit, the other end of the filter circuit is connected to the ground of the controller, the one end of the second resistor is connected to one end of another filter circuit, and the other end of the another filter circuit is connected to the ground of the controller.

According to the automatic turnover device of the present invention, since the elastic element (for example, the torsional spring or plate spring) is installed, the elastic element stores the predetermined energy when the turnover piece is in the closed position, and at least partially releases the stored predetermined energy in the open process of the turnover piece, thereby reducing the torque when the motor drives the turnover piece to open, and causing the turnover piece to be smoothly opened. Therefore, the motor with smaller power can be adopted, and the production cost is reduced. Besides, a motor with smaller powder can be adopted, the noise is small, and thus the comfort level of the operation environment is further improved.

In addition, when the turnover piece encounters a counteraction force when closed, the control system can send an instruction to rotate the motor backwards and a clamping preventing function is realized; when any torsional spring is failed, the control system can give out the instruction instantly, such that the turnover piece is turned over upwards to be opened, stops movement when arriving at a final position, and causes the device main body to give out an alarm, thereby greatly improving the use safety performance of the device and greatly improving the market competitiveness and the brand image of an enterprise.

Other features, advantages and effects of the present invention become more clear and explicit by means of the description on the exemplary embodiments given in the following accompanying drawings.

Brief Description Of The Drawings

The exemplary embodiments of the present invention are described exemplarily in detail in combination with the accompanying drawings, wherein in the accompanying drawings:

Fig. 1 is a perspective view illustrating an automatic turnover device according to an exemplary embodiment of the present invention;

Fig. 2 is an exploded perspective view illustrating the automatic turnover device according to the exemplary embodiment of the present invention, wherein an example that one fixing sleeve and one torsional spring are mounted on only one rotary shaft is illustrated;

Fig. 3 is a perspective view illustrating an automatic turnover device according to another exemplary embodiment of the present invention;

Fig. 4 is an exploded perspective view illustrating the automatic turnover device according to the another exemplary embodiment of the present invention, wherein an example that one fixing sleeve and one torsional spring are mounted on two rotary shafts, respectively, is illustrateed;

Fig. 5 is a perspective view illustrating an automatic turnover device according to a further embodiment of the present invention;

Fig. 6 is an exploded perspective view illustrating an automatic turnover device according to the further embodiment of the present invention, wherein an example is illustrated that one fixing sleeve and two torsional springs are mounted on one rotary shaft and one fixing sleeve and one torsional spring are mounted on another rotary shaft;

Fig. 7 is a perspective view illustrating an automatic turnover piece according to yet another exemplary embodiment of the present invention;

Fig. 8 is an exploded perspective view illustrating an automatic turnover piece according to the yet another exemplary embodiment of the present invention and an example that one fixing sleeve and two torsional springs are mounted on both of the two rotary shafts is illustrated;

Fig. 9 is a schematic diagram illustrating an automatic turnover device according to an alternative embodiment of the present invention, wherein a solid line illustrates that a cover plate is in a close position, and at this point, the elastic element stores predetermined energy;

Fig. 10 illustrates an alternative mounting manner of a torsional spring;

Fig. 11 illustrates a specific example of an elastic element mounting portion and an elastic element, wherein the torsional spring is in a state of storing predetermined energy in Fig. 11(a), and is in a state of releasing the predetermined energy in Fig. 11(b);

Fig. 12 is a brief block diagram of the control system 9;

Fig. 13 is a specific circuit diagram used for controlling the operation of the automatic turnover device according to the present invention; and

Fig. 14 illustrates three working states of a motor.

Detailed Description

The exemplary embodiments of the present invention will be described with reference to the accompanying drawings. It should be noted that the exemplary embodiments illustrated in the accompanying drawings and described in detail herein are merely intended to make those skilled in the art better understand the present invention rather than limit the present invention to the described and illustrated specific structural form. The protection scope of the present invention is defined by the accompanying claims and equivalents thereof.

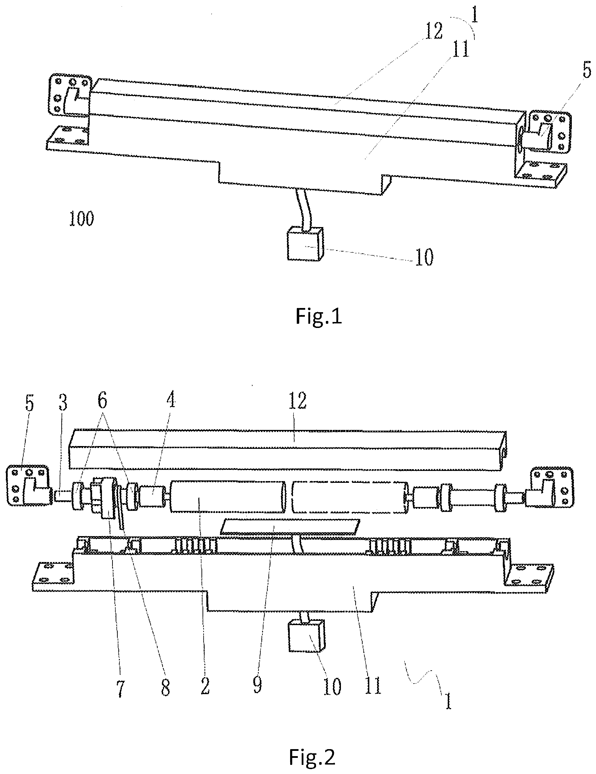

Fig. 1 illustrates a perspective view of an automatic turnover device 100 according to an exemplary embodiment of the present invention. The automatic turnover device 100 is used for automatically move a turnover piece between a closed position and an open position. As shown in Fig. 2, the turnover piece can be mounted on the automatic turnover device 100 by a connecting member 5.

As shown in Fig. 1, the automatic turnover device 100 comprises a housing 1 consisting of a base 11 and a cover 12. The base 11 can be fixed to the device body having the turnover piece (not shown) or serve as a part of the device body.

The cover 12 covers the base so as to define an airtight space in the housing 1. A motor, rotary shafts and torsional springs of the automatic turnover device 100 (described later) are contained in the airtight space. Since constituting components of the automatic turnover device 100 are contained in the airtight space, foreign matters such as dust and water are prevented from entering the housing 1, and a working noise of the motor, etc., can be reduced. In order to improve the airtightness of the housing 1 consisting of the base 11 and the cover 12, a sealing member (not shown) can be arranged between the base 11 and the cover 12. The sealing member can be in any form, for example, a sealing ring or sealing adhesive.

When the base 11 and the cover 12 are assembled together to form the housing 1 defining the airtight space, openings or holes for mounting the bearings 6 described later are defined in two ends of the base 11 and the cover 12. The rotary shaft 3 of the automatic turnover device 100 extends through the bearings 6 in the openings or holes to connect the connecting member 5.

As shown in Fig. 1, the connecting member 5 is mounted on the rotary shaft 3 extending out of the housing 1, and is used for mounting the turnover piece to be driven (not shown), for example, a rotary mechansim such as a cover plate, a lid or a door. It is noted that the connecting member 5 in the drawing is merely one example used for connecting the turnover piece to be turned over, and different connecting members 5 can be adopted according to a specific shape and an mounting space of the turnover piece. In addition, Fig. 1 and Fig. 2 illustrate a case that two connecting members 5 are adopted to mount the turnover piece to be driven, however, three or more connectors can be adopted according to actual needs.

In addition, the rotary shaft 3 can be connected to the connecting member 5 in any proper manner. For example, the rotary shaft 3 can be connected to the connecting member 5 by means of key connection, spline connection, etc.

With reference to Fig. 2, which illustrates an exploded perspective view of an automatic turnover device 100 according to one exemplary embodiment of the present invention. As shown in Fig. 2, the automatic turnover device 100 comprises a drive mechanism 2, and the drive mechanism 2 is mounted in the base 11. The drive mechanism 2 can be mounted in the base 11 in any proper manner. An output shaft of the drive mechanism 2 is connected to one end of the rotary shaft 3 by a coupler 4. The rotary shaft 3 is supported on the base 11 by a bearing 6. The other end of the rotary shaft 3 is used for connecting with the connecting member 5 for mounting the turnover piece. When the drive mechanism 2 operates, the rotary shaft 3 is driven to rotate by the coupler 4, and then the rotary shaft 3 drives the connecting member 5 and the turnover piece to turn over, thus realizing the opening and closing of the turnover piece.

In the present exemplary embodiment, the drive mechanism 2 comprises a motor and a speed reduction gearbox (not shown). The speed reduction gearbox is used for reducing a high rotating speed output from the motor to a low rotating speed suitable for driving the rotary shaft 3. The speed reduction gearbox can comprise a first speed reduction gear and a second speed reduction gear, wherein the first speed reduction gear is connected to an output shaft of the motor and meshed with the second speed reduction gear, the second speed reduction gear is connected to the output shaft of the drive mechanism, the tooth number of the first speed reduction gear is less than that of the second speed reduction gear, so as to reduce the high rotating speed output from the motor. The tooth number of the first speed reduction gear and the tooth number of the speed reduction gear can be determined according to an expected turnover and opening speed of the turnover piece. Of course, the drive mechanism 2 can only comprise a motor, that is, use the motor to directly drive the rotary shaft 3.

The power and number of the motor can be properly selected according to a load torque (for example the weight of the turnover piece) of the turnover piece, a friction, a preset torque of a torsional described later (one preferable example of the elastic element), etc.

Although the exemplary embodiment describes that the drive mechanism 2 uses the motor as a drive source, the present invention is not limited thereto. Other drive sources can be selected according to specific application conditions. For example, a hydraulic motor, a pneumatic motor, etc., can be adopted as the drive source.

As shown in Fig. 2, the output shaft of the drive mechanism 2 is connected to one end of the rotary shaft 3 by the coupler 4. The coupler can be in the form of a sleeve coupler. The sleeve coupler connects the output shaft of the drive mechanism 2 to the rotary shaft 3 using a common sleeve through rigid members such as keys and splines. The sleeve coupler has the advantages of simple structure, convenience in manufacture, lower cost and capability of fully meeting the requirements of the present invention. Of course, other types of couplers can be adopted according to specific cases, for example, a universal joint coupler, a flange coupler and the like.

The rotary shaft 3 is supported on the base 11 using two bearings 6. Preferably, one bearing is mounted in the opening or hole defined by the base 11 and cover 12. The rotary shaft 3 extends out of the housing 1 via the bearing mounted in the opening or hole so as to be connected with the connecting member 5 for mounting the turnover piece.

Fig. 2 illustrates a case that each rotary shaft 3 is supported by two bearings 6. However, the support shaft 3 can also be supported by only one bearing 6. In such case, the bearing 6 is preferably mounted in the opening or hole defined by the base 11 and cover 12. Of course, if the rotary shaft 3 is longer, two or more bearings 6 are preferably used to support the rotary shaft 3 on the base 11.

Continuing to refer to Fig. 2. Fig. 2 illustrates two drive mechanisms 2 (one is denoted by a solid line and the other is denoted by a dotted line). However, only one of the drive mechanisms can be used. Of course, if one drive mechanism 2 is not enough to drive the turnover piece to turn over, then two or more drive mechanisms 2 as shown in Fig. 2 can be adopted. In a case that the two drive mechanisms 2 as shown in Fig. 2 are adopted, one drive mechanism 2 as well as the corresponding coupler 4, bearing 6 and rotary shaft 3 thereof and the other drive mechanism 2 as well as the corresponding coupler 4, bearing 6 and rotary shaft 3 thereof can be symmetrically disposed in a mirror image manner. If three or more drive mechanisms 2 are to be adopted, a third drive mechanism 2 and the corresponding coupler 4, bearing 6, rotary shaft 3 and connecting member 5 for connecting the turnover piece thereof can be disposed between the two drive mechanisms 2 as shown in Fig. 2. In the present invention, the specific number of the drive mechanism 2 is not limited and a proper number of drive mechanisms can be adopted according to actual needs.

It needs to be noted that Fig. 2 illustrates a case that the turnover piece is turned over up and down around a horizontal axis. But, the above description is also suitable for the case that the turnover piece is turned over left and right around a vertical axis.

Continuing to describe with reference to Fig. 2, as shown in Fig. 2, the automatic turnover device 100 further comprises a fixing sleeve 7 (an example of the elastic element mounting portion) and a torsional spring 8 (an example of the elastic element). The fixing sleeve 7 is fixed to the rotary shaft 3 so as to rotate together with the rotary shaft 3. One end of the torsional spring 8 is mounted to the fixing sleeve 7, and the other end is mounted to the base 11.

In Fig. 2, the fixing sleeve 7 and the torsional spring 8 are fixed on the rotary shaft 3 at the left side. However, the fixing sleeve 7 and the torsional spring 8 can also be fixed on the rotary shaft 3 at the right side (that is to say, the fixing sleeve 7 and the torsional spring 8 can be fixed on any rotary shaft 3 no matter one drive mechanism (shown by the solid line) or two drive mechanisms are adopted).

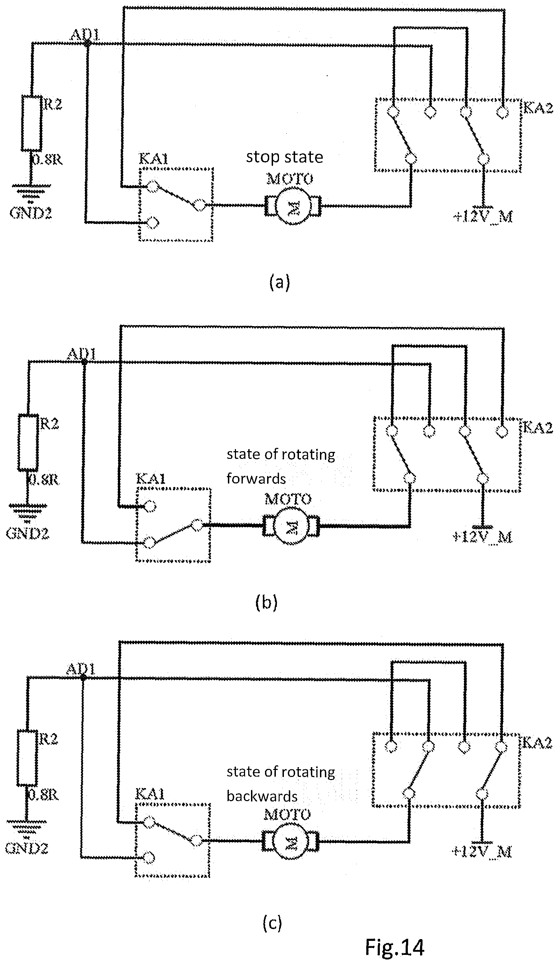

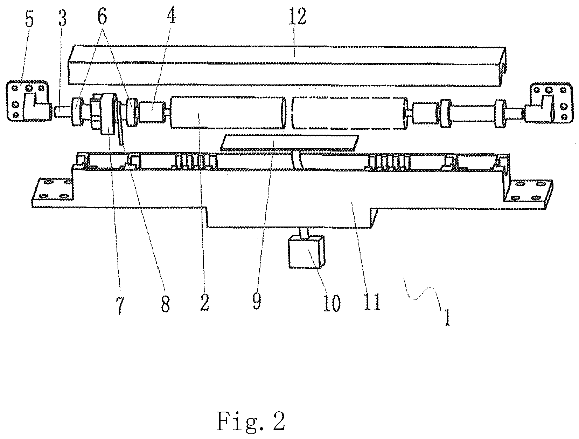

Fig. 14 illustrates a specific exemplary structure of the fixing sleeve 7. As shown in Fig. 14, the fixing sleeve 7 has a central through hole, and the rotary shaft 3 penetrates through the through hole. The fixing sleeve 7 can be fixed to the rotary shaft 3 by a pin, a key, or a spline (not shown) to rotate along with the rotary shaft 3. The fixing sleeve 7 can also be fixedly connected to the rotary shaft 3 in other manners, for example, the rotary shaft 3 and the fixing sleeve 7 can be die-cast into one piece. One or two sides of the fixing sleeve 7 in the axial direction of the rotary shaft 3 are provided with U-shaped concave portions (Fig. 14 only illustrates a case that one side is provided with a U-shaped concave portion), one end of the torsional spring 8 is contained in the U-shaped concave portion, a support leg located at such end abuts against one side of the U-shaped concave portion and the other end abuts against the base 11.

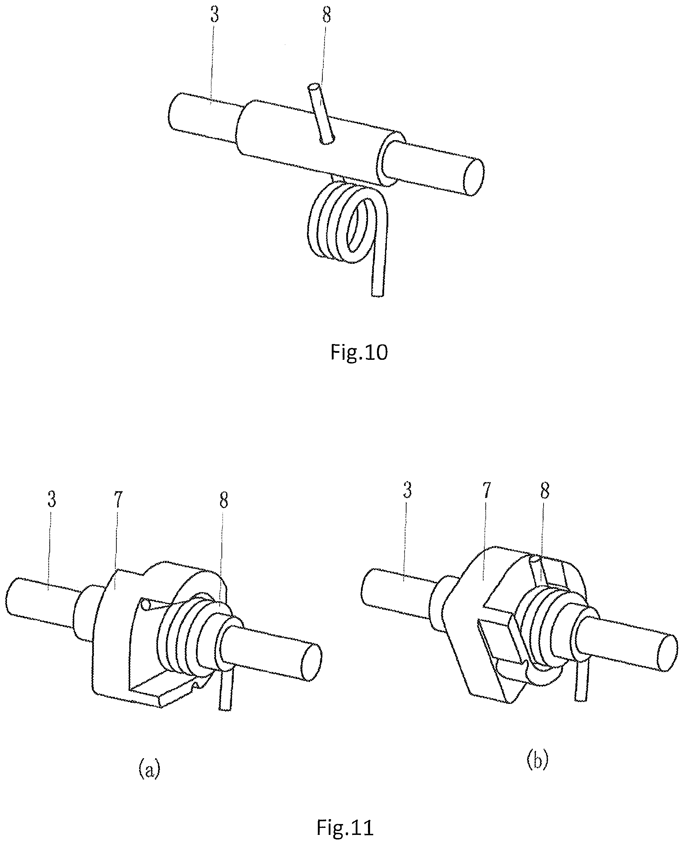

The example of the elastic element mounting portion is not only limited to the fixing sleeve 7. For example, a fixing way in Fig. 10 can be adopted. In Fig. 10, the rotary shaft 3 is provided with a radial through hole penetrating through the rotary shaft 3, the support leg at one end of the torsional spring 8 can be inserted into the radial through hole, and the support leg at the other end is mounted to the base 11. Of course, the torsional spring 8 can be fixed in other ways according to actual needs.

How to mount the torsional spring 8 is described as follows. When the turnover piece mounted on the connecting member 5 is located in the closed position, the torsional spring 8 is forced to store predetermined energy (for example, elastic potential energy (torque force and torque)), when the drive mechanism 2 (for example the motor) drives the turnover piece from the closed position to the open position, the predetermined energy stored by the torsional spring 8 is released, thus balancing the weight of the turnover piece mounted to the connector during the driving process. That is to say, in the open process, the turnover piece is driven to the open position from the closed position by means of the combination of the drive torque of the drive mechanism 2 and the torque of the torsional spring. Hence, since the torque of the torsional spring assists the drive mechanism to drive the turnover piece during the drive process, compared with a case without using the torsional spring 8, the drive mechanism 2 with smaller power can be adopted. For example, the motor with smaller power can be adopted. Since the power of the motor is smaller, the noise generated during operation of the motor is further reduced, and a comfort level of an operation environment is improved. In addition, the cost of the whole system is reduced since the motor with smaller power is adopted.

On another aspect, since the torsional spring is mounted to store predetermined energy when the turnover piece is in the closed position, the turnover piece can be turned over (i.e., opening and closing) more smoothly using a buffering action of the torsional spring.

The predetermined energy stored by the torsional spring 8 when the turnover piece is located in the closed position can be set in such a way: when the turnover piece is located in the closed position, the predetermined energy stored by the torsional spring 8 is not enough to open the turnover piece separately. That is to say, the predetermined energy stored by the torsional spring 8 cannot open the turnover piece in a case that the drive mechanism does not drive the turnover piece. Preferably, in the process that the drive mechanism drives the turnover piece to move toward the open position, the torsional spring 8 at least partially releases the stored predetermined energy, therefore, in the process that the turnover piece moves to the open position, a weight action thereof can be at least partially balanced by the predetermined energy of the torsional spring 8, and the drive power required by the motor of the drive mechanism is thud reduced.

In addition, when the turnover piece arrives at the open position, preferably, the torsional spring 8 still remains at least one part of the pre-stored energy (elastic potential energy). In this way, even the turnover piece is located in the open position, the torsional spring 8 can also keep certain tension using the remaining torque force thereof.

In above description, the torsional spring is configured and mounted to store the predetermined energy when the turnover piece is in the closed position, and to at least partially release the stored predetermined energy when the at least one drive mechanism is driving the turnover piece from the closed position to the open position, thus at least partially balancing the weight of the turnover piece during the driving process. Under the teaching of the present invention, those skilled in the art can properly select various design parameters of the torsional spring according to specific working load (the weight, friction force and the like of the turnover piece), a turnover angle of the turnover piece and required predetermined stored energy (for example, elastic potential energy), thereby meeting the above requirements of the present invention.

For example, those skilled in the art can calculate rigidity of the torsional spring according to the following formula:

$$T'=E*d4/(3367*D*n) \ (N.mm/(°)) \qquad …….. \ (1)$$

wherein, E is elastic modulus, d is steel wire diameter, D is the mean diameter of the torsional spring, and n is the number of active coils or turns.

A working torque of the torsional spring is calculated according to the above formula (1):

$$T1=T'*\varphi \ (N.mm),$$

wherein, $\varphi$ is a working angle (°) of the torsional spring. Thus it can be seen that the torque of the torsional spring is in direct proportion to the working angle thereof.

The torque of the turnover piece is calculated according to the weight and gravity center of the turnover piece, and the remaining torque when the turnover piece is located in the open positon is considered to determine the pre-stored torque (elastic potential energy) required when the turnover piece is located in the closed position.

In addition, in a case that the drive mechanism comprises a static motor, a static torque $M_{static}$ torque of the static motor of the at least one drive mechanism, a maximal load torque $M_{maximal\ turnover\ piece\ torque}$ of the turnover piece and the maximal torque $M_{maximal\ elastic}$ element torque of the at least one elastic element (for example the torsional spring) are set to meet: $M_{maximal\ turnover}$ piece torque $>M_{static\ torque}> M_{maximal\ turnover\ piece\ torque}-M_{maximal}$ elastic element torque, such that the turnover piece is capable of stopping in any position in a predetermined interval between the closed position and the open position. If the turnover piece is C degrees (for example 0 degree generally) when in the closed position and P degrees when in a fully open position (relative to the closed position), then a range of the predetermined interval is for example, from (C+X degrees) to (P-Y) degrees. In some examples, X can be 1-20 degrees, and preferably 5-15 degrees, Y can be 1-20 degrees and preferably 5-15 degrees. Of course, X and Y can be other values according to the elastic characteristic of the selected elastic element (for example, the torsional spring), thereby defining different predetermined intervals.

When the turnover piece is located in a horizontal position, a load torque of the turnover piece is the maximal, while the elastic element (for example the torsional spring) has the maximal torque in the closed position, and stores the maximal torque, that is, store the predetermined energy.

For the cases that the elastic element adopts other forms (for example, a coil spring and a compression spiral spring), the predetermined energy that the elastic element needs to store when the turnover piece is in the closed position can be determined in a similar way.

The above described the example that the torsional spring 8 and the fixing sleeve 7 are adopted as the elastic element and the elastic element mounting portion. However, the elastic element and the elastic element mounting portion can also adopt other forms. For example, if the required torque is smaller, a coil spring can be adopted except for the torsional spring. In a case that the coil spring is adopted, the inner end of the coil spring is directly fixed to the rotary shaft 3 and the other end is fixed to the base 11. In such a case, a part of the rotary shaft 3 serves as the elastic element mounting portion.

Similarly, when the turnover piece is located in the closed position, the coil spring is forced to store the predetermined energy and releases the stored predetermined energy in a process that the drive mechanism 2 drives the turnover piece toward the open position from the closed position, thus at least partially balancing an opening resistance or weight action of the turnover piece. The predetermined energy that the coil spring needs to store can be determined by referring to the manner of determining the predetermined energy stored by the torsional spring.

In addition, the compression spiral spring can be selected. In a case of selecting the compression spiral spring, one end of the compression spring is fixed to the fixing sleeve 7, and the other end is fixed to the base 11. Similarly, the compression spring is mounted to store the predetermined energy when the turnover piece is in the closed position, and to release the stored predetermined energy when the drive mechanism 2 is driving the turnover piece from the closed position to the open position, thus at least partially balancing the weight of the turnover piece during the driving process. Therefore, the compression spiral spring and the coil spring can achieve the same action and effect as those of the torsional spring.

As the elastic element mounting portion, except for the fixing sleeve 7, other forms of elastic element mounting portion can also be adopted. For example, one end of a U-shaped platelike member having a shape consistent with the shape of the rotary shaft 3 can be fixed to the rotary shaft by welding or other manners, and the other end is provided with a hole. One end of the elastic element such as the torsional spring can be fixed to the hole, and the other end is fixed to the base 11. The torsional spring 8 can sleeve the rotary shaft 3.

Those skilled in the art can adopt other types of elastic elements and corresponding fixing manners according to specific application.

The operation process of the automatic turnover mechanism 100 is described by taking the exemplary embodiments as shown in Fig. 1 and Fig. 2 as examples.

As shown in Fig. 1 and Fig. 2, the automatic control mechanism 100 also comprises a control system. The control system 9 is connected to the drive mechanism 2, and is connected with an external main control system by a connector 9. The control system 9 is described in detail later.

When the control system 9 receives a starting signal from the external main control system, the drive mechanism 2 is started. At this point, the turnover piece is located in the closed position, and the torsional spring 8 stores predetermined energy. When the opening instruction is received, the drive mechanism 2 drives the rotary shaft 3 to rotate by the coupler 4, under the action of the bearing 6, the rotary shaft 3 stably rotates, and the rotary shaft 3 drives the connecting member 5 and the turnover piece to turn over. Since the fixing sleeve 7 is fixed to the rotary shaft 3, the fixing sleeve 7 and the rotary shaft 3 rotate together. Along with the rotation of the fixing sleeve 7, the predetermined energy stored by the torsional spring 8 is gradually released, thus balancing the weight of the turnover piece. Since the energy pre-stored by the torsional spring assists the drive mechanism to open the turnover piece, the torque to drive the rotary shaft by the drive mechanism 2 is smaller, therefore, the drive mechanism with small power can be adopted and the noise of the drive mechanism is thus reduced. In addition, since the motor of the drive mechanism can work under smaller load, the stability is ensured, the reliability of the product is thus improved and the turnover piece is smoothly turned over.

In the exemplary embodiment as shown in Fig. 2, a static torque $M_{static}$ torque of the static motor of the at least one drive mechanism 2, a maximal load torque $M_{maximal\ turnover\ piece\ torque}$ of the turnover piece and the maximal torque $M_{maximal}$ elastic element torque of the at least one elastic element 8 are set to meet: $M_{maximal\ turnover\ piece\ torque} > M_{static}$ torque $> M_{maximal\ turnover\ piece\ torque} - M_{maximal}$ elastic element torque, such that the turnover piece is capable of stopping in any position in a predetermined interval between the closed position and the open position. Hence, when the motor of the drive mechanism has a fault and cannot work, the torque of the torsional spring 8 and the static torque of the motor are used to balance the weight of the turnover piece, such that the turnover piece can be stopped in any position in the above interval without fast closing downwards due to dead weight, thereby preventing accidents and ensuring the safety of the turnover device in the use process.

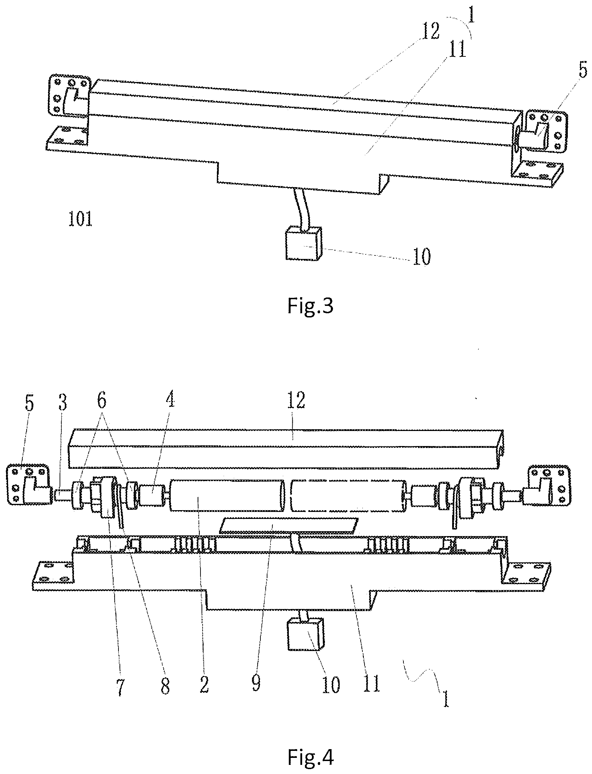

Another exemplary embodiment is described with reference to Figs. 3 and 4.

Fig. 3 illustrates a perspective view of another exemplary embodiment of the present invention, and Fig. 4 illustrates an exploded perspective view of the another exemplary embodiment of the present invention.

The automatic turnover mechanism 101 as illustrated in Fig. 3 and Fig. 4 is basically same as the automatic turnover mechanism 100 as illustrated in Fig. 1 and Fig. 2, and the difference is that the automatic turnover mechanism 101 as illustrated in Fig. 3 and Fig. 4 has two torsional springs 8.

As shown in Fig. 4, a fixing sleeve 7 and the corresponding torsional spring 8 are mounted on both the rotary shaft 3 at the left side and the rotary shaft 3 at the right side. The mounting manners of the fixing sleeves 7 and the torsional springs 8 are same as those as illustrated in Fig. 1 and Fig. 2 and are not repeated.

Two bearings 6 are mounted on two sides of the fixing sleeves 7 and the torsional springs 8 respectively, and the bearings 6 can support the rotary shaft 3 in the base 11 rotatably. In the exemplary embodiment as shown in Fig. 4, when one drive mechanism 2 (for example the drive mechanism at the left side) is adopted, the rotary shaft 3 at the right side becomes a driven shaft of the turnover piece.

In a case of disposing two torsional springs 8, the specific design parameters of the torsional springs 8 are determined according to the weight (working load) and gravity center of the turnover piece, the turnover angle of the turnover piece, etc. The two torsional springs are unnecessary to have the same design parameters as long as their combinations can store the predetermined energy when the turnover piece is in the closed position, and at least partially release the stored predetermined energy when the at least one drive mechanism is driving the turnover piece from the closed position to the open position, thus at least partially balancing the weight of the turnover piece during the driving process. In addition, any combination of the torsional spring, the coil spring and the compression spiral spring can be adopted without fully adopting torsional springs.

A working process of the automatic turnover mechanism as illustrated in Fig. 3 and Fig. 4 are same as those as illustrated in Fig. 1 and Fig. 2.

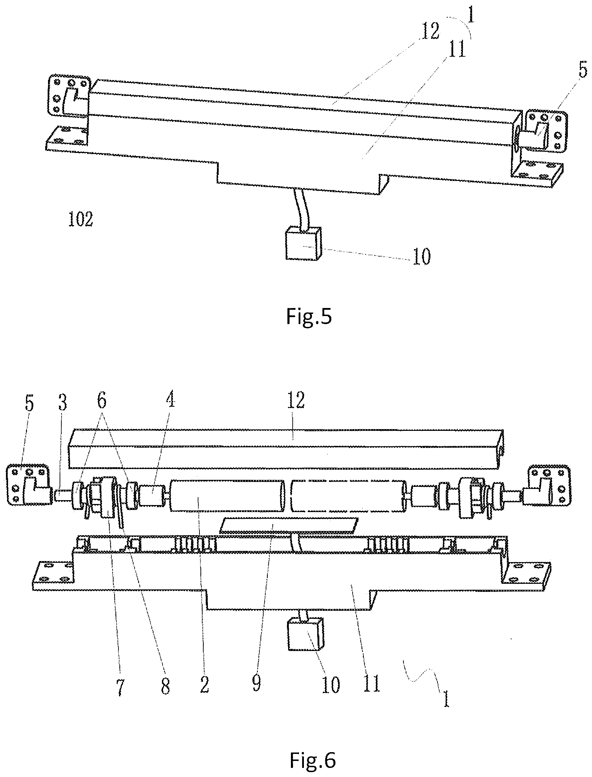

A further exemplary embodiment of the automatic turnover piece of the present invention is described with reference to Fig. 5 and Fig. 6.

Fig. 5 illustrates a perspective view of a further exemplary embodiment of the present invention, and Fig. 6 illustrates an exploded perspective view of the further embodiment of the present invention.

The automatic turnover mechanism 102 as illustrated in Fig. 5 and Fig. 6 is basically same as the automatic turnover mechanism 101 as illustrated in Fig. 3 and Fig. 4, and the difference is that the automatic turnover mechanism 102 as illustrated in Fig. 5 and Fig. 6 has three torsional springs 8.

As shown in Fig. 6, a fixing sleeve 7 is mounted on the rotary shaft 3 at the left side and a torsional spring 8 is mounted at each of the two sides of the fixing sleeve 7. A fixing sleeve 7 is mounted on the rotary shaft 3 at the right side, and a torsional spring 8 is mounted at the right side of the fixing sleeve 7. The mounting manners of the fixing sleeves 7 and the torsional springs 8 in such embodiment are same as those as illustrated in Fig. 1 and Fig. 2.

In the embodiment as illustrated in Fig. 6, only one drive mechanism 2 (for example, the drive mechanism shown by the solid line) can be used, and two or more drive mechanisms 2 can also be used. When one drive mechanism 2 (for example, the drive mechanism shown by the solid line) is used, the fixing sleeve 7 and two torsional springs 8 can also be arranged at the rotary shaft 3 at the right side, while one fixing sleeve 7 and one torsional spring 8 are disposed on the rotary shaft 3 at the left side. Those skilled in the art can conceive other mounting manners, for example, all the three torsional springs 8 are mounted on the rotary shaft 3 at the left side or right side.

An operation manner of the automatic turnover mechanism 102 is same as that of the automatic turnover mechanism 100.

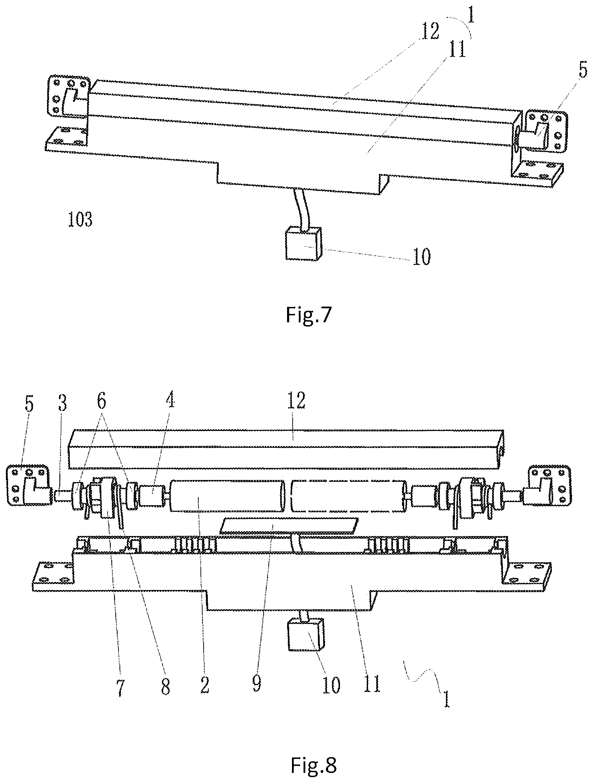

The automatic turnover device 103 of the present invention is described with reference to Fig. 7 and Fig. 8.

Fig. 7 illustrates a perspective view of a yet another exemplary embodiment of the present invention, and Fig. 8 illustrates an exploded perspective view of the yet another embodiment of the present invention.

The automatic turnover mechanism 103 as illustrated in Fig. 7 and Fig. 8 is basically same as the automatic turnover mechanism 101 as illustrated in Fig. 3 and Fig. 4, and the difference is that the automatic turnover mechanism 103 as illustrated in Fig. 7 and Fig. 8 has four torsional springs 8.

As shown in Fig. 8, two torsional springs 8 are arranged on both the rotary shaft 3 at the left side and the rotary shaft 3 at the right side. Specifically, the fixing sleeve 7 at the left side is fixedly mounted on the rotary shaft 3 at the left side between the two bearings 6 at the left side. The two torsional springs 8 are arranged at two sides of the fixing sleeve 7 in the manner as described above, that is, one ends of the two torsional springs 8 are mounted in the U-shaped concave portion of the fixing sleeve 7 respectively, and the other ends are mounted at the base 11 respectively. The fixing sleeve 7 at the right side is fixedly mounted on the rotary shaft 3 at the right side between the two bearings 6 at the right side. The two torsional springs 8 are fixed to two sides of the fixing sleeve 7 in the manner as described above, that is, one ends of the two torsional springs 8 are mounted in the U-shaped concave portion of the fixing sleeve 7 respectively, and the other ends are mounted at the base 11 respectively.

In the embodiment as illustrated in Fig. 8, the four torsional springs 8 are mounted at the rotary shaft 3 at the left side or the rotary shaft 3 at the right side. Other mounting manners are also in a scope of the present invention.

Similarly, in the embodiment as shown in Fig. 8, the four torsional springs 8 are not necessarily the same, and different types of elastic elements or combination thereof can be selected according to actual needs. For example, different combinations of the torsional spring, the coil spring and the compression spiral spring can be adopted to achieve the above action and effect too.

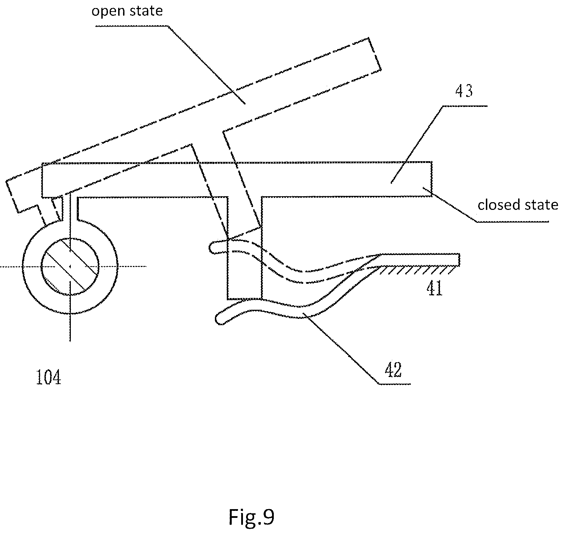

Fig. 9 illustrates an automatic turnover mechanism 104 according to an alternative exemplary embodiment of the present invention. The automatic turnover mechanism 104 differs from the automatic turnover mechanism 100-103 as illustrated in Fig. 1-Fig. 8 in the type of the elastic elements and disposing positions thereof. In such embodiment, a plate spring 42 is adopted as the elastic element that is disposed on an elastic element mounting base 41 instead of being disposed on any rotary shaft 3. The elastic element mounting base 41 can be mounted on the device body having a device body or serve as a part of the device body.

As shown in Fig. 9, one end of the plate spring 9 is fixed to the elastic element mounting base 41. The plate spring 9 can be fixed to the mounting base in any suitable manner, for example, welding, riveting, and bolt or screw connecting. The other end of the plate spring 9 abuts against the underside of cover plate 43 (an example of the turnover piece). According to an action length of the plate spring 42, a protrusion allowing the plate spring 42 to abut is disposed on the udnerside of the cover plate 43. Of course, the plate spring 42 can directly abut against the underside of the cover plate 43.

In the embodiment as illustrated in Fig. 9, the cover plate 43 is opened and closed under driving of the drive mechanism 2 (not shown in Fig. 9). In the closed position of the cover plate 2 (a horizontal position shown by a solid line in Fig. 9), predetermined energy is stored in the plate spring 42. In a process that the drive mechanism 2 drives the cover plate 43 from the closed position to the open position (the position shown by a dotted line in Fig. 9), the predetermined energy stored by the plate spring 42 is released, thus balancing the weight action of the turnover piece.

The predetermined energy can be set as follows: in the process that the cover plate 43 moves to the open position from the closed position, the plate spring 42 at least partially releases the stored predetermined energy. But preferably, when the cover plate 43 is located in the open position, the plate spring 42 is not recovered to its free state completely. Thus, it can be ensured that the plate spring 42 firmly abuts against the cover plate 43 with proper tension.

The torque of the turnover piece can be calculated according to the weight and gravity center of the turnover piece, and the parameters of the plate spring 42 are determined according to a turnover angle of the turnover piece, the predetermined energy that the plate spring 42 needs to store when the turnover piece is in the closed position, and the remaining energy of the plate spring 42 when the turnover piece is located in the fully open position.

Fig. 9 illustrates an example of using the plate spring 42. But except for the plate spring 42, a compression spiral spring, a leaf spring, etc., can also be used. Of course, any combination of the plate spring, the compression spiral spring and a leaf spring can be adopted.

As abovementioned, the automatic turnover piece 100 further comprises a control system 9. The control system 9 is communicatively connected with an external main control system (for example, a main control system of a device having a turnover piece) and the drive mechanism 2. The control system 9 receives a signal (for example, a starting signal, a reset signal or other signals) from the external main control system, analyzes and processes the external input signal, and then sends a control instruction to control the operation of the motor of the drive mechanism. For example, the motor rotates forwards to close the turnover piece, the motor rotates backwards to open the turnover piece. In addition, the control system monitors a current of the motor. A protection control signal is sent if the current is abnormal to correspondingly control the motor.

An operation process of the control system 9 is described in detail with reference to the automatic turnover device 100 as illustrated in Fig. 2.

As illustrated in Fig. 2, the control system 9 is in communication connection with the external main control system by a connector 10 located outside the housing 1. When the automatic turnover device 100 is not operated, the turnover piece is in the closed position, and the torsional spring 8 stores predetermined energy. When the automatic turnover device 100 is powered on, the control system 9 begins to operate. When the control system 9 receives a starting signal from the external main control system, the control system begins to control the drive mechanism 2. When the control system 9 receives an instruction of opening the turnover piece, the control system 9 controls the drive mechanism 2 to open the turnover piece. In the opening process, the control system 9 monitors a current of the motor of the drive mechanism 2. If the current of the motor detected by the control system 9 exceeds a first predetermined threshold value, it is indicated that a drive torque of the motor is larger than that during normal driving, which indicates that the predetermined energy stored by the torsional spring 8 is not properly released in an opening process of the turnover piece, that is to say, the torsional spring 8 has a fault (failed or falling off) and thus fails to overcome the weight of the turnover piece in the opening process. In such case, the control system 9 gives out a warning. The warning can be sent in a manner of sound or light (LED).

In addition, in the closing process of the turnover piece, the control system 9 also detects the current of the motor. If the current of the motor is lower than a second predetermined threshold value, it is indicated that the torsional spring 8 does not buffer the closing action of the turnover piece, and thus the predetermined energy cannot be stored using the weight of the turnover piece, therefore it is judged that the torsional spring 9 has a fault (failed or falling off). In such case, the control system gives out a warning.

In addition, in the closing process of the turnover piece, if the current of the motor is larger than a third predetermined threshold value, it is indicated that the turnover piece clamps or collides other objects (for example the hand of a child) in the closing process. In such case, the control system 9 controls the drive mechanism 2 to rotate backwards, thus enabling the turnover piece to rotate to an opening direction to avoid clamping or damaging the objects.

When the control system 9 receives a reset signal, the control system 9 controls the drive mechanism 2, closes the turnover piece, and enables the torsional spring 8 to store energy in the closing process.

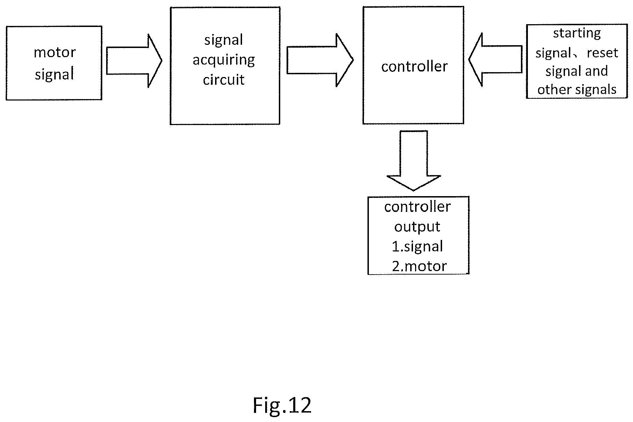

Fig. 12 illustrates an exemplary block diagram of a control system 9. As illustrated in Fig. 12, the control system 9 comprises a signal acquiring circuit and a controller, etc. In Fig. 12, the controller receives a starting signal, a reset signal and other signals from the external main control system, and outputs a motor control signal to the motor. In the meantime, the controller monitors an operation state of the motor. For example, the controller acquires the current of the motor by a signal acquiring circuit and judges various operation states of the motor by means of the acquired current and adopts a corresponding measure, as abovementioned.

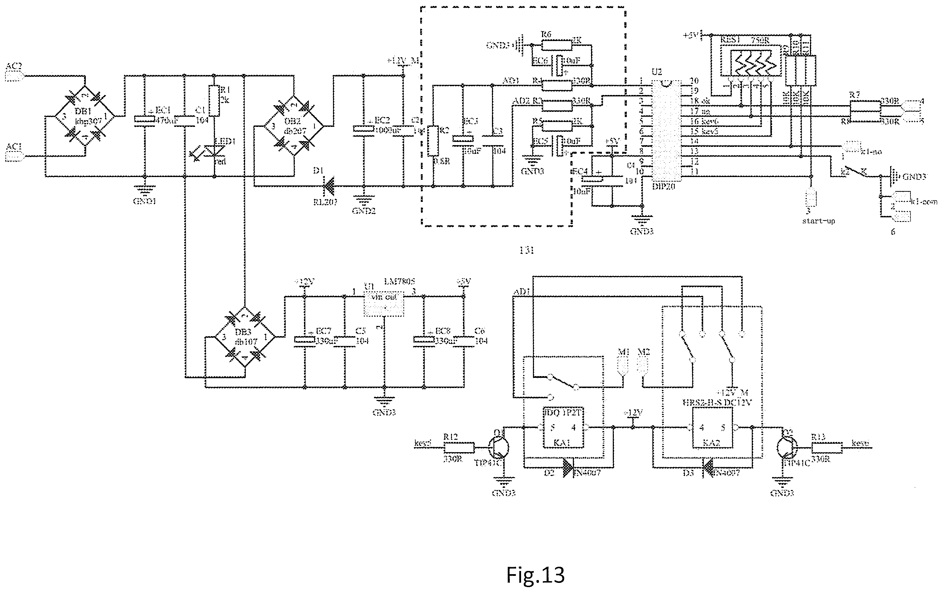

Fig. 13 illustrates a specific circuit diagram of a control system 9 used for controlling the automatic turnover device 100. In Fig. 13, a singlechip U2 (model: STC15F204EA) is adopted as a controller of the control system 9. The singlechip of such type has 8-way 10-bit AD (Analogue to Digital) converters. However, other types of singlechips can also be adopted as long as the singlechip at least has two paths of AD converters and a data processing capacity.

The singlechip U2 receives a control instruction from the external main control system by pins 3, 4, 5 and controls the motor of the drive mechanism 2 by means of two pins key5 and key6, that is, control the motor to rotate forwards and backwards.

The reference number 131 in Fig. 13 denotes a signal acquiring circuit. The signal acquiring circuit 131 comprises resistors R4, R3 and R2. One end of the resistor R4 is connected to a pin 1 (one channel of AD converter) of the U2, and one end of the resistor R3 is connected to the pin 2 (the other channel of AD converter) of the U2. Of course, the one ends of the resistors R4 and R3 can also be connected to other input pins of the AD converter.

The other end of the resistor R4 is connected to one end of the resistor R2 at AD1, and the AD1 is connected to a power source input end of the motor and is used for sampling a voltage or current signal of the motor. The other end of the resistor R2 is connected to a ground GND 2, and the other end AD2 of the resistor R3 is connected to the GND2. Two capacitors EC3 and C3 are connected in parallel between the AD1 and AD2.

In addition, a filter circuit consisting of a resistor R6 and a capacitor EC6 are connected between the pin 1 of the U2 and the resistor R4 and between the pin 2 of the U2 and the resistor R3. The filter circuit is used for filtering signals of the input pins 1, 2 to make the signals more smooth.

As abovementioned, the AD1 is connected to a power source input end of the motor so as to sample the voltage or current of the motor. Fig. 14 illustrates the connecting positions of the AD1 in the stopping state, forward rotating state and backward rotating state of the motor. Such connecting positions ensure that a forward voltage is obtained at the AD1 always. A contact switch connecting manner of relays KA1 and KA2 when the motor stops, rotates forwards and rotates backwards is a common technology in the art and is not repeated here.

When the motor operates, a signal sampled from the AD1 is input to the pin 1 of the U2 as one input signal of the AD converter of U2 via the resistor R4. Meanwhile, the AD2 signal (zero voltage theoretically) connected to the ground GND2 is input to the pin 2 of the U2 via the resistor R3. The U2 performs differential treatment on the two input signals by means of software so as to eliminate the interference in the acquired motor signals.

In the traditional motor signal acquiring solution, usually, the motor signals are directly input to one channel of AD converter of the singlechip by a differential amplifier. The solution has the defects that the amplifier occupies the space of a circuit board and the cost is higher. While in the present invention, the multiple channels of AD of the singlechip are used, and two signals (one signal is the motor signal and the other signal is a reference signal, i.e., a ground signal) are input via two channels. Thus, the interference to the motor signal can be eliminated by performing differential treatment via software programming of the singlechip.

In addition, the inventor also found in the experiment that if the ground terminals of the signal acquiring circuit and the singlechip U2 are connected to the same ground, as the signal acquiring circuit and the motor share the same ground, the inducted high electromotive force produced during the process the motor frequently turns on and off can interfere with the singlechip and even cause system damage.

Therefore, in the present invention, the ground terminal of the signal acquiring circuit and the ground terminal of the motor are connected to the GND2, and the ground terminal of the singlechip is connected to a different ground GND3. Hence, since the ground terminal of the motor and the ground terminal of the singlechip are connected to different grounds, the influence on the singlechip caused by frequently turning on and off the motor is avoided and a sampling precision and stability of the motor signal are further improved.

In addition, Fig. 13 further illustrates power sources DB1, DB2 and DB3 for providing a current and/or a voltage for the controller (for example the singlechip U2), the motor M (M1 and M2 are two positive and negative connection terminals of the motor) and the relays KA1 and KA2. These power sources can server as a part of the control system 9 and can also be separately disposed.

It should be noted that the specific type and resistance values and capacitance values of the resistors and capacitors as shown in Fig. 13 are merely exemplary, those skilled in the art can adopt other types of resistors, capacitors and resistance values and capacitance values according to specific cases. In addition, the GND1, GND2 and GND3 in Fig. 13 denote different grounds, that is, these grounds are separate.

Other circuit structures are not related to the theme of the present invention and belong to a common technology in the art that is not repeated here.

Although the present invention has been described with reference to the exemplary embodiments as illustrated in the accompanying drawings, the present invention is not limited to the described specific embodiments. In the spirit and scope of the present invention, those skilled in the art can perform various modifications and changes on the exemplary embodiments. The scope of the present invention is defined by accompanying claims and equivalents thereof.

**Claims**

1. An automatic turnover device for opening and closing a turnover piece, comprising:

   a base (11) mounted on a device body having the turnover piece;
   at least one drive mechanism (2) mounted on the base (11) and connected to the turnover piece, and enabling the turnover piece to automatically move between a closed position and an open position; and
   at least one elastic element configured and mounted to store predetermined energy when the turnover piece is in the closed position, and to at least partially release the stored predetermined energy during the process that the at least one drive mechanism is driving the turnover piece from the closed position to the open position, thereby at least partially balancing the weight of the turnover piece during the driving process.

2.  The automatic turnover device according to claim 1, **characterized in that** the automatic turnover device further comprises:

    at least one rotary shaft (3), one end of the at least one first rotary shaft (3) of the at least one rotary shaft (3) being connected to an output shaft of the at least one drive mechanism (2) respectively by a coupler (4) and the other end being connected to the turnover piece; and
    at least one supporting member (6), rotatably supporting the at least one rotary shaft (3) on the base (11) respectively.

3.  The automatic turnover device according to claim 2, **characterized in that** the one end of at least one second rotary shaft (3) of the at least one rotary shaft (3) is a free end, and the other end is connected to the turnover piece.

4.  The automatic turnover device according to claim 2 or 3, **characterized in that** the automatic turnover device further comprises at least one connecting member (6) connected to the other end of the at least one rotary shaft (3) respectively and used for mounting the turnover device.

5.  The automatic turnover device according to claim 2 or 3, **characterized in that** the number of the at least one supporting member (6) is twice that of the at least one rotary shaft (3), and each rotary shaft (3) of the at least one rotary shaft (3) is supported by two supporting members (6).

6.  The automatic turnover device according to claim 2 or 3, **characterized in that** the at least one supporting member (6) is a bearing.

7.  The automatic turnover device according to any one of claims 1-3, **characterized in that** the at least one drive mechanism (2) comprises a motor.

8.  The automatic turnover device according to claim 2, **characterized in that** the automatic turnover device further comprises at least one elastic element mounting portion, respectively fixed to at least one of the at least one first rotary shaft (3), wherein, one end of the at least one elastic element (8) is mounted to the elastic element mounting portion, and the other end of the at least one elastic element (8) is connected to the base (11) respectively.

9.  The automatic turnover device according to claim 3, **characterized in that** the automatic turnover device further comprises at least one elastic element mounting portion, respectively fixed to at least one of the at least one first rotary shaft (3) and/or the at least one second rotary shaft (3), wherein, one end of the at least one elastic element (8) is mounted to the elastic element mounting portion, and the other end of the at least one elastic element (8) is mounted to the base (11) respectively.

10.  The automatic turnover device according to claim 8 or 9, **characterized in that** one or two sides of each elastic element mounting portion of the at least one elastic element mounting portion are provided with at least one elastic element (8).

11.  The automatic turnover device according to claim 8 or 9, **characterized in that** the elastic element mounting portion is a fixing sleeve (7) fixedly connected to at least one of the at least one first rotary shaft (3) and/or at least one second rotary shaft (3), wherein both sides or one side of the fixing sleeve (7) in the axial direction are or is provided with a U-shaped concave portion for containing one end of the elastic element.

12.  The automatic turnover device according to claim 8 or 9, **characterized in that** the elastic element mounting portion is a radial through hole penetrating through the rotary shaft, one end of the elastic element is mounted in the through hole and the other end is mounted to the base (11).

13.  The automatic turnover device according to claim 8 or 9, **characterized in that** one supporting member (6) for supporting the rotary shaft (3) is arranged on each of both sides of each of the at least one elastic element mounting portion.

14.  The automatic turnover device according to claim 8 or 9, **characterized in that** the at least one elastic element (8) is at least one selected from a group consisting of a torsional spring, a coil spring and a compression spiral spring or any combination thereof.

15. The automatic turnover device according to claim 2 or 3, **characterized in that** the automatic turnover device further comprises an elastic element mounting base, mounted on the device body having the turnover piece or serving as a part of the device body, wherein, one end of the at least one elastic element is fixed to the mounting base and the other end abuts against the underside of at least a part of the turnover piece.

16. The automatic turnover device according to claim 15, **characterized in that** the at least one elastic element is at least one selected from a group consisting of a plate spring, a compression spiral spring and a leaf spring or any combination thereof.

17. The automatic turnover device according to any one of claims 1-16, **characterized in that** the at least one drive mechanism (2) comprises a speed reduction motor, and a static torque $M_{static}$ torque of the speed reduction motor, a maximal load torque $M_{maximal\ turnover\ piece\ torque}$ of the turnover piece and the maximal torque $M_{maximal}$ elastic element torque of the at least one elastic element (8) are set to meet: $M_{maximal\ turnover\ piece\ torque} > M_{static\ torque} > M_{maximal\ turnover\ piece\ torque} - M_{maximal\ elastic\ element\ torque}$, such that the turnover piece is capable of stopping in any position in a predetermined interval between the closed position and the open position.

18. The automatic turnover device according to claim 2 or 3, **characterized in that** the automatic turnover device further comprises a cover (12), the cover (12) and the base (11) together constitute a housing (1) for defining an airtight space, the at least one drive mechanism (2) is contained in the airtight space, wherein the other end of the at least one rotary shaft (3) extends out of the housing (1) respectively.

19. The automatic turnover device according to claim 1, **characterized in that** the automatic turnover device further comprises a control system (9) in communication connection with the drive mechanism (2), wherein the control system (9) monitors a current of the at least one drive mechanism (2) in an opening process of the turnover piece, and gives out a fault warning when the current of the at least one drive mechanism (2) is higher than a first predetermined threshold value.

20. The automatic turnover device according to claim 19, **characterized in that** the control system (9) further monitors a current of the at least one drive mechanism (2) in a closing process of the turnover piece, and gives out a fault warning when the current of the at least one drive mechanism (2) is lower than a second predetermined threshold value.

21. The automatic turnover device according to claim 19 or 20, **characterized in that** the control system (9) further monitors a current of the at least one drive mechanism (2) in a closing process of the turnover piece, gives out a safety warning when the current of the at least one drive mechanism (2) is higher than a third predetermined threshold value and drives the turnover piece toward the open position by the at least one drive mechanism (2).

22. The automatic turnover device according to claim 19, **characterized in that** the control system (9) is in communication connection with an external main control system by a connector (10) disposed outside the base (11).

23. The automatic turnover device according to claim 1, **characterized in that** the automatic turnover device further comprises a control system (9), wherein the control system (9) is connected to a motor of the at least one drive mechanism (2) and comprises:

   a controller, being in communication connection with an external main control system and connected to the motor so as to control the motor according to a signal from the external main control system, and comprising at least two AD converters; and
   a signal acquiring circuit, comprising:

      a first resistor (R4), one end of the first resistor (R4) being connected to one of the at least two AD converters and the other end (AD1) being connected to a power source input end of the motor and used for acquiring a voltage or current signal of the motor;
      a second resistor (R3), one end of the second resistor (R3) being connected to the other of the at least two AD converters, and the other end (AD2) being connected to a ground terminal of the motor; and
      a milliohm resistor (R2), one end of the milliohm resistor (R2) being connected to the other end (AD1) of the first resistor (R4) and the other end of the milliohm resistor (R2) being connected to the ground terminal of the motor,

wherein the controller performs differential treatment on the two signals acquired by the two AD converters to eliminate the interference in the acquired motor signals.

24. The control system (9) according to claim 23, **characterized in that** the ground terminal of the motor and the ground terminal of the controller are connected to separate grounds (GND2, GND3).

25. The control system (9) according to claim 23 or 24, **characterized in that** the signal acquiring circuit further comprises capacitors (EC3, C3), connected in parallel with each other, and connected between the other end of the first resistor (R4) and the ground (GND2) of the motor in parallel with the milliohm resistor (R2).

26. The control system (9) according to claim 23 or 24, **characterized in that** the one end of the first resistor (R4) is also connected to one end of a filter circuit, the other end of the filter circuit is connected to the ground (GND3) of the controller, the one end of the second resistor (R3) is connected to one end of another filter circuit, and the other end of the another filter circuit is connected to the ground (GND3) of the controller.

27. A control system (9) for controlling motor operation, comprising:

a controller, being in communication connection with an external main control system and connected to the motor so as to control the motor according to a signal from an external main control system, and comprising at least two AD converters; and
a signal acquiring circuit, comprising:

a first resistor (R4), one end of the first resistor (R4) being connected to one of at least two AD converters and the other end (AD1) being connected to a power source input end of the motor and used for acquiring a voltage or current signal of the motor;
a second resistor (R3), one end of the second resistor (R3) being connected to the other of the at least two AD converters, and the other end (AD2) being connected to a ground terminal of the motor; and
a milliohm resistor (R2), one end of the milliohm resistor (R2) being connected to the other end (AD1) of the first resistor (R4) and the other end of the milliohm resistor (R2) being connected to the ground terminal of the motor,

wherein the controller performs differential treatment on the two signals acquired by the two AD converters to eliminate the interference in the collected motor signals.

28. The control system (9) according to claim 27, **characterized in that** the ground terminal of the motor and the ground terminal of the controller are connected to separate grounds (GND2, GND3).

29. The control system (9) according to claim 27 or 28, **characterized in that** the signal acquiring circuit further comprises capacitors (EC3, C3), connected in parallel with each other, and connected between the other end of the first resistor (R4) and the ground (GND2) of the motor in parallel with the milliohm resistor (R2).

30. The control system (9) according to claim 27 or 28, **characterized in that** the one end of the first resistor (R4) is connected to one end of a filter circuit, the other end of the filter circuit is connected to the ground (GND3) of the controller, the one end of the second resistor (R3) is connected to one end of another filter circuit, and the other end of the another filter circuit is connected to the ground (GND3) of the controller.

Fig.1

Fig.2

Fig.3

Fig.4

Fig.5

Fig.6

Fig.7

Fig.8

open state

43

closed state

41

104

42

Fig.9

Fig.10

(a)

(b)

Fig.11

Fig.12

Fig.13

(a)

(b)

(c)

Fig.14

Fig. 2

# INTERNATIONAL SEARCH REPORT

| International application No. |
| --- |
| PCT/CN2014/084536 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III   Observations where unity of invention is lacking (Continuation of item 3 of first sheet)**

This International Searching Authority found multiple inventions in this international application, as follows:

[1] The independent claim 1 of the present invention claims an automatic turning device including a base, a driving mechanism, a rotating componet and an elastic element; the independent claim 27 claims a control system including a controller and a signal collecting circuit. These two inventions do not share a same or corresponding special technical feature, therefore the two inventions do not meet the requirement of unity.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on protest**        ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

# INTERNATIONAL SEARCH REPORT

| International application No. |
| --- |
| PCT/CN2014/084536 |

**A. CLASSIFICATION OF SUBJECT MATTER**

F16C 11/12 (2006.01) i; A47K 13/12 (2006.01) i

According to International Patent Classification (IPC) or to both national classification and IPC

**B. FIELDS SEARCHED**

Minimum documentation searched (classification system followed by classification symbols)

F16C; A47K

Documentation searched other than minimum documentation to the extent that such documents are included in the fields searched

Electronic data base consulted during the international search (name of data base and, where practicable, search terms used)

EPODOC, WPI, CNPAT, CNKI: open+, clos+, turn+, rotat+, elastic+, coil, torsion, spring?, motor, driv+, automatic+, hinge, pivot+

**C. DOCUMENTS CONSIDERED TO BE RELEVANT**

| Category* | Citation of document, with indication, where appropriate, of the relevant passages | Relevant to claim No. |
| --- | --- | --- |
| X | CN 102197973 A (JIANGMEN IDEAR HANYU ELECTRICAL APPLIANCE CO LTD) 28 September 2011 (28.09.2011) description, paragraphs [0033]-[0049], figures 1-5 | 1-30 |
| PX | CN 103807286 A (HUIZHOU TONELUCK ELECTRO MECHANICS CO LTD) 21 May 2014 (21.05.2014) claims 1-4, description, paragraphs [0003]-[0016], figures 1 and 2 | 1-22 |
| PX | CN 203685842 U (HUIZHOU TONELUCK ELECTRO MECHANICS CO LTD) 02 July 2014 (02.07.2014) claims 1-4, description, paragraphs [0003]-[0016], figures 1 and 2 | 1-22 |
| A | CN 2506599 Y (STATE RUN NO 4192 FACTORY) 21 August 2002 (21.08.2002) the whole document | 1-30 |
| A | CN 201120297 Y (DONGGUAN BONSEN ELECTRONICS CO) 24 September 2008 (24.09.2008) the whole document | 1-30 |
| A | KR 20030064317 A (KIDA MAKOTO) 31 July 2003 (31.07.2003) the whole document | 1-30 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
| --- | --- |
| 16 November 2014 | 25 November 2014 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer XU, Yuan Telephone No. (86-10) 62089943 |
| --- | --- |

Form PCT/ISA /210 (second sheet) (July 2009)

**INTERNATIONAL SEARCH REPORT**
Information on patent family members

| International application No. |
| --- |
| PCT/CN2014/084536 |

| Patent Documents referred in the Report | Publication Date | Patent Family | Publication Date |
| --- | --- | --- | --- |
| CN 102197973 A | 28 September 2011 | None | |
| CN 103807286 A | 21 May 2014 | None | |
| CN 203685842 U | 02 July 2014 | None | |
| CN 2506599 Y | 21 August 2002 | None | |
| CN 201120297 Y | 24 September 2008 | None | |
| KR 20030064317 A | 31 July 2003 | TW 200302412 A | 01 August 2003 |
| | | US 2003140457 A1 | 31 July 2003 |
| | | JP 2004003594 A | 08 January 2004 |
| | | CN 1434223 A | 06 August 2003 |

Form PCT/ISA /210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201410069989